(19) Europäisches Patentamt / European Patent Office / Office européen des brevets

(11) **EP 4 290 107 A1**

(12) **EUROPEAN PATENT APPLICATION**
published in accordance with Art. 153(4) EPC

(43) Date of publication:
**13.12.2023 Bulletin 2023/50**

(21) Application number: **22749409.3**

(22) Date of filing: **07.01.2022**

(51) International Patent Classification (IPC):
**F16L 9/02** (2006.01)     **B60R 21/264** (2006.01)
**C21D 7/02** (2006.01)     **C22C 38/00** (2006.01)
**C22C 38/50** (2006.01)     **F02M 55/02** (2006.01)

(52) Cooperative Patent Classification (CPC):
**B60R 21/264; C21D 7/02; C22C 38/00;
C22C 38/50; F02M 55/02; F16L 9/02;** Y02P 10/20

(86) International application number:
**PCT/JP2022/000422**

(87) International publication number:
**WO 2022/168530 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.02.2021 JP 2021016940**

(71) Applicant: NIPPON STEEL CORPORATION
**Chiyoda-ku
Tokyo 100-8071 (JP)**

(72) Inventors:
• **MAKINO, Taizo
Tokyo 100-8071 (JP)**
• **YAMAZAKI, Masahiro
Tokyo 100-8071 (JP)**

(74) Representative: **Zimmermann & Partner
Patentanwälte mbB
Postfach 330 920
80069 München (DE)**

(54) **PRESSURE PIPING STEEL PIPE AND STEEL PIPE MATERIAL**

(57)     There is provided a steel pipe for pressure piping, the steel pipe being subjected to autofrettage. An average hardness of the steel pipe at its outer layer region is 1.20 times or more an average hardness of the steel pipe at its inner layer region. When an outer diameter of the steel pipe is denoted by D, and an inner diameter of the steel pipe is denoted by d, and when a measured value of a residual stress at an outer surface is denoted by $\sigma_{o1}$, a measured value of a residual stress at an outer surface after halving is denoted by $\sigma_{o2}$, and a measured value of a residual stress at an inner surface after the halving is denoted by $\sigma_{i2}$, an estimated value $\sigma_{i1}$ of a residual stress at the inner surface of the steel pipe that is determined by $[\sigma_{i1} = (-\sigma_{i2}) / (A \times (t/T)^2 - 1)]$, $[t/T = ((\sigma_{o2}-\sigma_{o1}) / (A \times (\sigma_{o2}-\sigma_{o1}) - C \times \sigma_{i2}))^{1/2}]$, $[A = 3.9829 \times \exp(0.1071 \times (D/d)^2)]$, and $[C = -3.3966 \times \exp(0.0452 \times (D/d)^2)]$ is -150 MPa or less.

FIGURE 3

(After autofrettage)

EP 4 290 107 A1

**Description**

TECHNICAL FIELD

The present invention relates to a steel pipe for pressure piping and a starting material for a steel pipe.

BACKGROUND ART

Pressure piping including a hydraulic cylinder, an airbag steel pipe, an accumulator, a pipe for hydrogen, and the like is required to have not only high strength but also excellent internal pressure fatigue properties.
For example, Patent Document 1 discloses a method for producing a steel pipe for a cylinder tube excellent in internal pressure fatigue properties. In the method, the steel pipe for a cylinder tube is produced by drawing a steel pipe, and after the drawing, the steel pipe is subjected to heat treatment at 300 to 350°C.

LIST OF PRIOR ART DOCUMENTS

PATENT DOCUMENT

Patent Document 1: JP4-183820A

NON PATENT DOCUMENT

Non-Patent Document 1: Eisuke Nakayama, Mitsuo Miyahara, Kazuo Okamura, Hiroki Fujimoto, and Kiyoyuki Fukui, "Prediction of Fatigue Strength of Spot-Welded Joints Based on Local Material Strength Properties Measured by Small Specimen", J.Soc, Mat. Sci., Japan, Vol. 53, No. 10, pp. 1136-1142, Oct. 2004
Non-Patent Document 2: The Society of Materials Science, Japan, "Standard for X-Ray Stress Measurement (2002) - Iron and Steel -", Mar. 2002

SUMMARY OF INVENTION

TECHNICAL PROBLEM

According to Patent Document 1, a steel pipe for a cylinder tube excellent in internal pressure fatigue properties can be provided by enhancing strength at proportional limit. However, there has recently been a demand for further enhancing the internal pressure fatigue properties, leaving room for improvement.
Examples of a method for enhancing the internal pressure fatigue properties include a method of performing autofrettage. The autofrettage is a process of producing compressive residual stress by causing an excessive internal pressure to act, thus partly causing an inner surface and the vicinity of the inner surface to deform plastically.
As is obvious, as the strength of a material of a steel pipe increases, a higher pressure can be applied to an inside of the resultant pipe. However, in a case where a pressure is applied to an inside of a steel pipe, an internal pressure marking a limit up to which no fracture due to fatigue occurs at an inner surface of the steel pipe (hereinafter, referred to as a "critical internal pressure") does not depend only on the strength of the material of the steel pipe. Performing the autofrettage enables an increase in the critical internal pressure without increasing a tensile strength of the steel pipe.
However, if a pressure applied in the autofrettage to an inner surface of a steel pipe is excessively high, the risk of bursting (bursting) increases. Therefore, the pressure is generally set to be low from the viewpoint of safety. As a result, even with the autofrettage performed, the conventional techniques fail to increase the critical internal pressure sufficiently and room for improvement still remains.
In addition, in the case of a thin-wall pipe, a problem therewith is that it is difficult to partly cause only the inner surface and the vicinity of the inner surface to plastically deform because a difference between stresses at inner and outer surfaces of the steel pipe is small and there is a possibility that the entire pipe may yield.
An objective of the present invention is to solve the problem and to provide a steel pipe for pressure piping having a high critical internal pressure and a starting material for a steel pipe.

SOLUTION TO PROBLEM

The present invention has been made to solve the problem and has a gist of a steel pipe for pressure piping and a starting material for a steel pipe described below.

(1) A steel pipe for pressure piping, the steel pipe being subjected to autofrettage, the steel pipe including an outer surface and an inner surface, wherein

an average hardness of the steel pipe in an outer layer region from the outer surface to a 1/4 wall-thickness depth position is 1.20 times or more an average hardness of the steel pipe in an inner layer region from the inner surface to a 1/4 wall-thickness depth position, and
when an outer diameter of the steel pipe is denoted by D (mm), and an inner diameter of the steel pipe is denoted by d (mm), and
when a measured value of a residual stress at an outer surface of the steel pipe after the autofrettage is denoted by $\sigma_{o1}$ (MPa), a measured value of a residual stress at the outer surface of the steel pipe after the autofrettage and halving is denoted by $\sigma_{o2}$ (MPa), and a measured value of a residual stress at an inner surface of the steel pipe after the autofrettage and the halving is denoted by $\sigma_{i2}$ (MPa),
an estimated value $\sigma_{i1}$ (MPa) of a residual stress at the inner surface of the steel pipe after the autofrettage is -150 MPa or less, the estimated value $\sigma_{i1}$ as determined by Formula (i) to Formula (iv) shown below.

$$\sigma_{i1} = (-\sigma_{i2}) / (A \times (t/T)^2 - 1) \qquad (i)$$

$$t/T = ((\sigma_{o2}-\sigma_{o1}) / (A \times (\sigma_{o2}-\sigma_{o1}) - C \times \sigma_{i2}))^{1/2} \qquad (ii)$$

$$A = 3.9829 \times \exp(0.1071(D/d)^2) \qquad (iii)$$

$$C = -3.3966 \times \exp(0.0452 \times (D/d)^2) \qquad (iv)$$

(2) The steel pipe for pressure piping according to above (1), wherein D/d is 2.0 or less.
(3) A starting material for a steel pipe for pressure piping, the starting material for a steel pipe to be used for an application for which the starting material for a steel pipe is to be subjected to autofrettage,

the starting material for a steel pipe including an outer surface and an inner surface, wherein
an average hardness of the steel pipe in an outer layer region from the outer surface to a 1/4 wall-thickness depth position is 1.20 times or more an average hardness of the steel pipe in an inner layer region from the inner surface to a 1/4 wall-thickness depth position, and
when the starting material for a steel pipe is subjected to the autofrettage,
when an outer diameter of the steel pipe after the autofrettage is denoted by D (mm), and an inner diameter of the steel pipe after the autofrettage is denoted by d (mm), and
when a measured value of a residual stress at an outer surface of the steel pipe after the autofrettage is denoted by $\sigma_{o1}$ (MPa), a measured value of a residual stress at the outer surface of the steel pipe after the autofrettage and halving is denoted by $\sigma_{o2}$ (MPa), and a measured value of a residual stress at an inner surface of the steel pipe after the autofrettage and the halving is denoted by $\sigma_{i2}$ (MPa),
an estimated value $\sigma_{i1}$ (MPa) of a residual stress at the inner surface of the steel pipe after the autofrettage is -150 MPa or less, the estimated value $\sigma_{i1}$ as determined by Formula (i) to Formula (iv) shown below.

$$\sigma_{i1} = (-\sigma_{i2}) / (A \times (t/T)^2 - 1) \qquad (i)$$

$$t/T = ((\sigma_{o2}-\sigma_{o1}) / (A \times (\sigma_{o2}-\sigma_{o1}) - C \times \sigma_{i2}))^{1/2} \qquad (ii)$$

$$A = 3.9829 \times \exp(0.1071 \times (D/d)^2) \qquad \text{(iii)}$$

$$C = -3.3966 \times \exp(0.0452 \times (D/d)^2) \qquad \text{(iv)}$$

(4) The starting material for a steel pipe for pressure piping according to above (3), wherein D/d is 2.0 or less.

ADVANTAGEOUS EFFECTS OF INVENTION

According to the present invention, pipes for pressure piping having a high critical internal pressure can be provided stably.

BRIEF DESCRIPTION OF DRAWINGS

[Figure 1] Figure 1 is a diagram illustrating an example of a steel pipe after the autofrettage for which a residual stress is to be estimated with an estimating device.
[Figure 2] Figure 2 is a diagram for describing a method for deriving multivariable functions.
[Figure 3] Figure 3 is a diagram for describing a method for deriving the multivariable functions.
[Figure 4] Figure 4 is a diagram for describing a method for deriving the multivariable functions.
[Figure 5] Figure 5 is a diagram for describing a method for studying preferable ranges of a hardness ratio of an outer layer region to an inner layer region and a ratio of an outer diameter to an inner diameter of a steel pipe.
[Figure 6] Figure 6 is a diagram for describing the method for studying preferable ranges of a hardness ratio of an outer layer region to an inner layer region and a ratio of an outer diameter to an inner diameter of a steel pipe.
[Figure 7] Figure 7 is a diagram for describing the method for studying preferable ranges of a hardness ratio of an outer layer region to an inner layer region and a ratio of an outer diameter to an inner diameter of a steel pipe.
[Figure 8] Figure 8 is a diagram for describing the method for studying preferable ranges of a hardness ratio of an outer layer region to an inner layer region and a ratio of an outer diameter to an inner diameter of a steel pipe.
[Figure 9] Figure 9 is a diagram for describing the method for studying preferable ranges of a hardness ratio of an outer layer region to an inner layer region and a ratio of an outer diameter to an inner diameter of a steel pipe.
[Figure 10] Figure 10 is a diagram for describing a shape of an internal pressure fatigue test specimen.
[Figure 11] Figure 11 is a diagram for describing a taking position and a shape of small test specimens having a dumbbell shape.

DESCRIPTION OF EMBODIMENTS

In the prior art, one of causes of a failure to optimize an autofrettage pressure for sufficiently increasing a critical internal pressure is that there is no established method for determining a residual stress on an inner surface of a steel pipe. Note that the residual stress herein means residual stress in a circumferential direction of the steel pipe.
The present inventors conventionally evaluated a residual stress at an inner surface of a steel pipe after the autofrettage in a relative manner by cutting the steel pipe after the autofrettage in half and measuring a residual stress at the inner surface of the steel pipe after the halving. Note that cutting in half means cutting a steel pipe such that the steel pipe is divided into two equal, arc-shaped members when viewed in its axial direction.
However, to increase critical internal pressure sufficiently by optimizing autofrettage pressure, a residual stress at an inner surface of a steel pipe after the autofrettage and before the halving needs to be evaluated quantitatively. The present inventors thus have conducted studies about a method for evaluating a residual stress at an inner surface of a steel pipe quantitatively. In the course of the studies, the present inventors studied the evaluation of a residual stress at an inner surface of a steel pipe after the autofrettage and before the halving with consideration given to a residual stress at the inner surface of the steel pipe after the halving as well as residual stresses at an outer surface of the steel pipe before and after the having.
The present inventors first conducted a numerical analysis (FEM analysis) under various conditions using an analytic model for a steel pipe to be evaluated, determining residual stresses (calculated values) that are produced at portions of the steel pipe by the autofrettage. Specifically, the present inventors first conducted the numerical analysis to determine a residual stress $\sigma_{o1}$ at an outer surface of the steel pipe after the autofrettage and before the halving, a residual stress $\sigma_{i1}$ at an inner surface of the steel pipe after the autofrettage and before the halving, a residual stress $\sigma_{o2}$ at an outer surface of the steel pipe after the autofrettage and the halving, and a residual stress $\sigma_{i2}$ at an inner

surface of the steel pipe after the autofrettage and the halving.

As a result of studies in depth about the residual stresses obtained in the above manner, the present inventors found that the residual stress $\sigma_{i1}$ at the inner surface of the steel pipe before the halving can be estimated with high accuracy using the residual stress $\sigma_{o1}$ at the outer surface of the steel pipe before the halving, the residual stress $\sigma_{o2}$ at the outer surface of the steel pipe after the halving, and the residual stress $\sigma_{i2}$ at the inner surface of the steel pipe after the halving.

The present inventors then came to obtain a finding that pipes having a high critical internal pressure can be provided stably by adjusting autofrettage conditions such that an estimated value $\sigma_{i1}$ of the residual stress at the inner surface of the steel pipe before the halving satisfies a predetermined condition.

In addition, as described above, a problem with a thin-wall pipe is that it is difficult to partly cause only the inner surface and the vicinity of the inner surface to deform plastically. As a result of further studies for solving this problem, the present inventors found that it is possible to cause even a thin-wall pipe to yield at only its inner surface and the vicinity of the inner surface to set up a residual stress by making in advance a hardness of the steel pipe on an outer surface side higher than a hardness of the steel pipe on an inner surface side.

The present invention is made based on the findings described above. Requirements of the present invention will be described below in detail.

1. Steel Pipe for Pressure Piping and Starting Material for Pipe

A steel pipe according to an embodiment of the present invention is a steel pipe for pressure piping that is subj ected to autofrettage. Pressure piping includes a hydraulic cylinder, an airbag steel pipe, an accumulator, a pipe for hydrogen, a fuel injection pipe, and the like. A starting material for a steel pipe according to another embodiment of the present invention is to be a starting material for the steel pipe for pressure piping and is to be used for applications for which the starting material needs to be subjected to autofrettage. That is, the steel pipe for pressure piping is obtained by subjecting the starting material for a steel pipe to autofrettage.

An average hardness of the starting material for a steel pipe at its outer layer region is 1.20 times or more an average hardness of the starting material for a steel pipe at its inner layer region. The reason for such a specification will be described later. Here, the outer layer region refers to a region extending from an outer surface of the starting material for a steel pipe to a 1/4 wall-thickness depth position, and an inner layer region refers to a region extending from an inner surface of the starting material for a steel pipe to a 1/4 wall-thickness depth position.

By setting the average hardness of the starting material for a steel pipe at the outer layer region to 1.20 times or more the average hardness of the starting material for a steel pipe at the inner layer region, it becomes possible to cause only the inner layer region to plastically deform without causing the outer layer region to yield when the starting material for a steel pipe is subjected to the autofrettage, so that a compressive residual stress can be set up. The average hardness of the starting material for a steel pipe at the outer layer region is preferably 1.50 times or more the average hardness at the inner layer region, and more preferably 2.00 times or more.

Here, the same relationship about the starting material for a steel pipe holds true for a steel pipe after the autofrettage because the autofrettage does not significantly change hardness. That is, an average hardness of the steel pipe at its outer layer region is 1.2 times or more an average hardness of the steel pipe at its inner layer region, preferably 1.5 times or more, and more preferably 2.0 times or more. Here, the outer layer region refers to a region extending from an outer surface of the steel pipe to a 1/4 wall-thickness depth position, and an inner layer region refers to a region extending from an inner surface of the steel pipe to a 1/4 wall-thickness depth position.

The average hardnesses of the starting material for a steel pipe or the steel pipe at its inner layer region and its outer layer region are measured as follows. First, a distribution of Vickers hardness on a section of the starting material for a steel pipe or the steel pipe is measured in conformance with JIS Z 2244:2009 (Vickers hardness test - Test method). The section may be a section perpendicular to an axial direction of the starting material for a steel pipe or the steel pipe or may be a section that is parallel to the axial direction and passes a central axis of the starting material for a steel pipe or the steel pipe.

As a hardness tester, a general-purpose micro-Vickers hardness meter is used, with a test force set to 1 to 10 N based on dimensions of the steel pipe. Measurement points are spaced away from one another at intervals of a distance of 1/10 to 1/20 of the wall thickness from the inner surface to the outer surface in a radial direction on a mirror-polished observation surface. If indentations are close to one another, some of the measurement positions may be shifted in a direction perpendicular to the radial direction to allow the measurement at positions in a staggered pattern. From the hardness distribution obtained in such a manner, values of hardness included in each of the inner layer region and the outer layer region are averaged, by which the average hardnesses in the inner layer region and the outer layer region are obtained.

There are no specific restrictions on a method for increasing the average hardness of the starting material for a steel pipe in the outer layer region (hereinafter, also referred to as a "hardening treatment"). Examples of the method include performing induction hardening from the outer surface side of the starting material for a steel pipe. Specifically, only the hardness in the outer layer region can be increased by performing high-frequency induction heating to instantaneously heat the starting material for a steel pipe so that a temperature of the outer surface becomes 900°C or more, and by immediately performing water cooling. After being subjected to the induction hardening, the starting material for a steel pipe may be subjected to tempering treatment in which the starting material for a steel pipe is hold at 100 to 300°C for 30 minutes or more and then subjected to air cooling, as necessary.

Alternatively, a method of performing shot peening treatment or rolling on the outer surface of the starting material for a steel pipe to cause only the outer layer region to undergo work hardening, a method of performing carburizing treatment, nitriding treatment, or carbonitriding treatment on the outer surface, or the like may be adopted.

In the present invention, there are no specific restrictions on the dimensions of the steel pipe. In general, to withstand high internal pressures, the steel pipe desirably has a wall thickness that is increased with an increase in an inner diameter of the steel pipe. With the inner diameter of the steel pipe being constant, an outer diameter of the steel pipe is increased with an increase in the wall thickness. That is, to withstand high internal pressures, the steel pipe desirably has an outer diameter that is increased with an increase in the inner diameter of the steel pipe. However, as described above, the effects of the present invention exert more conspicuously when the steel pipe is thin-wall. Accordingly, in the present invention, when the outer diameter of the steel pipe is denoted as D (mm), and the inner diameter of the steel pipe is denoted as d (mm), D/d may be 2.0 or less, 1.9 or less, or 1.8 or less.

The other dimensions may be selected based on the application of the steel pipe, and there is no need to impose specific restrictions on the dimensions. For example, in the case where the steel pipe is used as a hydraulic cylinder, it is generally preferable to select the inner diameter of the steel pipe within the range of 15 to 580 mm in accordance with working pressure (internal pressure) to secure the output (load) of a piston. In addition, it is preferable to select the wall thickness within the range of 5 to 60 mm and select the outer diameter within the range of 30 to 700 mm so that the steel pipe is capable of withstanding repetitive internal pressure. The higher an internal pressure fatigue strength of the steel pipe, the smaller the wall thickness can be made, which determines the outer diameter accordingly.

In the case where the steel pipe is used as an airbag inflator, the outer diameter of the steel pipe is desirably 20 to 100 mm, and more desirably 20 to 60 mm. The wall thickness of the steel pipe is desirably 1 to 5 mm, and more desirably 1 to 4 mm.

In the case where the steel pipe is used as an accumulator, the outer diameter of the steel pipe is desirably 25 to 500 mm, and more desirably 50 to 400 mm. The wall thickness of the steel pipe is desirably 2 to 40 mm, and more desirably 4 to 30 mm.

In the case where the steel pipe is used as a pipe for hydrogen gas or a fuel injection pipe, the steel pipe is required to have a certain amount of volume to reduce pressure fluctuations inside the steel pipe when used. For that reason, the inner diameter of the steel pipe is desirably 2.5 mm or more, and more desirably 3.0 mm or more. In addition, since the steel pipe needs to withstand high internal pressures, the wall thickness of the steel pipe is desirably 1.5 mm or more, and more desirably 2.0 mm or more. At the same time, the outer diameter of the steel pipe is desirably 20 mm or less, more desirably 15 mm or less, and still more desirably 10 mm or less.

Mechanical properties of the steel pipe are to be selected based on the application of the steel pipe, and there is no need to impose specific restrictions on the mechanical properties. However, in the case where the steel pipe is used in pressure piping, a tensile strength of the starting material for a steel pipe before the hardening treatment or a tensile strength of the steel pipe at the inner layer region after the hardening treatment or the subsequent autofrettage is preferably 500 MPa or more, more preferably 600 MPa or more, and still more preferably 700 MPa or more. A yield stress of the steel pipe is preferably 300 MPa or more, more preferably 360 MPa or more, and still more preferably 420 MPa or more.

A hardness of the starting material for a steel pipe before the hardening treatment or a hardness of the steel pipe at the inner layer region after the hardening treatment or the subsequent autofrettage is, in terms of Vickers hardness, preferably 150 HV or more, more preferably 180 HV or more, and still more preferably 220 HV or more. Although there is no need to provide an upper limit to the hardness, if the hardness of the steel pipe is excessively high particularly at the inner layer region, it is difficult to introduce a compressive residual stress by the autofrettage, and thus the hardness is preferably less than 500 HV in terms of Vickers hardness.

A yield ratio of the steel pipe is preferably 0.50 to 0.95. The yield ratio is more preferably 0.60 or more and still more preferably 0.70 or more so that the autofrettage is performed with a higher pressure to provide a high compressive residual stress. The yield ratio is preferably 0.90 or less, and more preferably 0.85 or less so that the autofrettage is performed with a low pressure to introduce the compressive residual stress more efficiently.

In the present invention, mechanical properties of the steel pipe at the inner layer region can be measured by conducting a tensile test on a small test specimen having a thickness of about 0.2 mm and a dumbbell shape as illustrated in Non-Patent Document 1 that is cut by electrical discharge machining in such a manner that the small test specimen adjoins the inner surface of the steel pipe. In the tensile test, strain is measured in conformance with the method described in Non-Patent Document 1, in which the strain is determined by making a conversion from a displacement of an actuator of a tensile test machine (stroke) and a length of a parallel portion of the test specimen.

In the case where a starting material for a steel pipe before the hardening treatment is available, mechanical properties of the starting material for a steel pipe are determined by cutting out a straight pipe section of the steel pipe, chucking regions extending by a certain length from both end faces of the straight pipe section (hereinafter, referred to as "grip portions"), and conducting a tensile test with an extensometer attached to a parallel portion of the straight pipe section between the grip portions. The chucking is made in such a manner as to press chuck jaws formed with a V groove or an R groove shallower than an external diameter of the steel pipe against the grip portions by means of hydraulic pressure or bolting, or a wedge jig. The length of the grip portions only has to be determined with consideration given to a pressing pressure and a test load so that the steel pipe subjected to the test does not slip during the test. The length of the parallel portion only has to be kept to the extent that the extensometer can be attached to the parallel portion, and that necking deformation occurring immediately before rupture is not affected by chucks. In the case where the steel pipe has no straight pipe section with a sufficient length, the tensile test may be conducted with a small test specimen having a thin dumbbell shape as described in Non-Patent Document 1 cut out from the steel pipe.

The steel pipe for pressure piping according to the present invention preferably has a critical internal pressure satisfying Formula (I) shown below.

$$IP \geq 0.44 \times TS \times \alpha \qquad (I)$$

$$\alpha = [(D/d)^2 - 1] / [0.776 \times (D/d)^2] \qquad (II)$$

In Formula (I) above, IP denotes the critical internal pressure (MPa) of the steel pipe, TS denotes the tensile strength (MPa) of the steel pipe at the inner layer region or of the starting material for a steel pipe, and $\alpha$ is a value given by Formula (II) above. In Formula (II) above, D denotes the outer diameter (mm) of the steel pipe, and d denotes the inner diameter (mm) of the steel pipe. $\alpha$ is a coefficient that compensates for changes in the relationship between the internal pressure and a stress produced at the inner surface of the steel pipe with the ratio of the outer diameter to the inner diameter of the steel pipe.

In the present invention, the critical internal pressure means a highest internal pressure (MPa) up to which no breakage (leak) occurs in an internal pressure fatigue test in which an internal pressure fluctuation following a sine wave over time is repeatedly applied with a lowest internal pressure set to 18 MPa, even when the number of repetitions of the internal pressure fluctuation reaches $10^7$. Specifically, on an S-N diagram in which its ordinate represents maximum internal pressure and its abscissa represents the number of repetitions at breakage, the critical internal pressure is considered as a middle value between a minimum value of maximum internal pressures at which a breakage occurs and a maximum value of maximum internal pressures at which no breakage occurs even when the number of repetitions reaches $10^7$.

2. Residual Stress Estimation Model

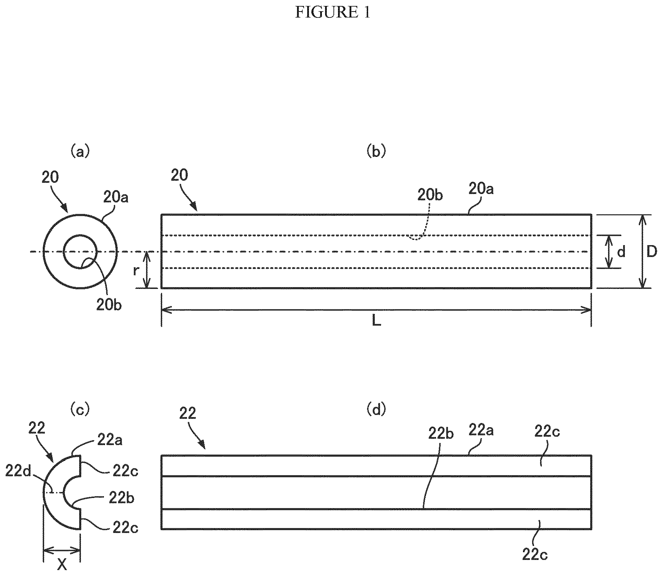

A model for estimating the residual stress $\sigma_{i1}$ at an inner surface of a steel pipe before halving will be described in detail. Figure 1 is a diagram illustrating an example of a steel pipe after the autofrettage for which a residual stress is to be estimated with this model. In Figure 1, (a) is a left side view of a steel pipe 20 that has been subjected to the autofrettage, (b) is a front view of the steel pipe 20 illustrated in (a), (c) is a left side view of a halved sample 22 obtained by cutting the steel pipe 20 illustrated in (a) in half, and (d) is a front view of the halved sample 22 illustrated in (c). Note that the steel pipe after halving herein means a halved sample obtained by cutting a steel pipe after the autofrettage in half.

In this model, measured values of a residual stress $\sigma_{o1}$ at an outer surface 20a of the steel pipe 20 after the autofrettage, a residual stress $\sigma_{o2}$ at the outer surface 22a of the halved sample 22, and a residual stress $\sigma_{i2}$ at an inner surface 22b of the halved sample 22 are used. Note that, as described above, the residual stresses each mean residual stress in a circumferential direction of the steel pipe 20.

Referring to Figure 1, for the measurement of the residual stresses, a length L of the steel pipe 20 is preferably set to be three times or more an outer diameter D of the steel pipe 20 and can be set to be, for example, about 30 mm. If cutting the steel pipe 20 in half generates excessive heat, the heat affects the residual stress at its inner surface. Therefore, it is necessary to adopt a cutting method that minimizes heat generation, and the steel pipe 20 is preferably cut in half by wire cut electrical discharge machining. At that time, in side view of the halved sample 22, a distance X between a cut surface 22c of the halved sample 22 and a center of the outer surface 22a (a distance in a direction perpendicular to the cut surface 22c) is controlled to be within ±5% of a radius r of the steel pipe 20.

The measurement of the residual stresses is conducted after outer layers of the outer surface 20a of the steel pipe 20 and the inner surface 22b of the halved sample 22 are removed by electropolishing by within the range of 10

μm or less. As a method of the measurement, a $\sin^2\psi$ method based on X-ray diffraction can be used, and the method can be performed in conformance with Non-Patent Document 2.

Multivariable functions of variables including the residual stresses $\sigma_{o1}$, $\sigma_{o2}$, and $\sigma_{i2}$, actually measured by the method described above as well as the outer diameter D and the inner diameter d are used to calculate an estimated value of the residual stress $\sigma_{i1}$.

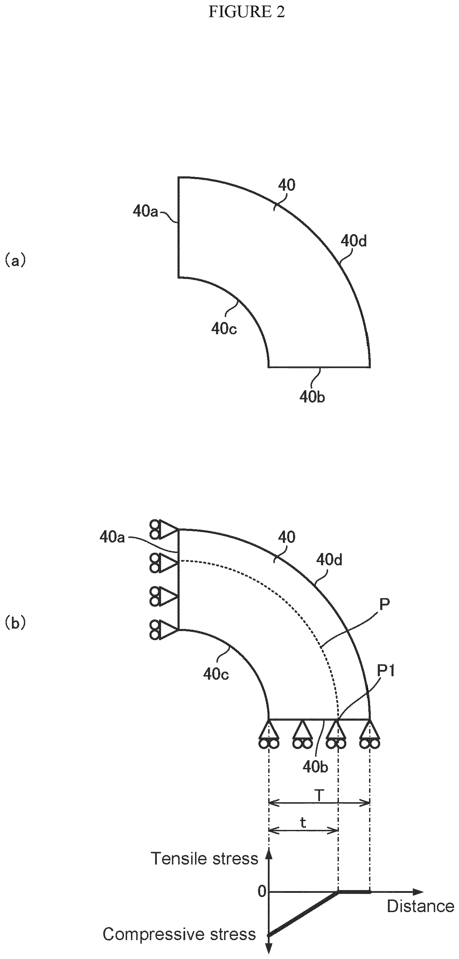

Specifically, as illustrated in Figure 2(a), an analytic model 40 (1/4 model) that is arc-shaped and obtained by modeling a cross section of the steel pipe 20 (a section perpendicular to a steel pipe axis direction) is created with two-dimensional plane strain elements. Although not illustrated, the analytic model 40 is divided into a plurality of elements (meshes). The analytic model 40 is assumed to have physical properties of an elastic body.

First, to simulate the steel pipe 20, as illustrated in Figure 2(b), constraint conditions are set such that both end portions 40a and 40b of the analytic model 40 in its circumferential direction are constrained from moving in the circumferential direction. Then, a volume force that simulates a state of the steel pipe 20 during the autofrettage is set as an initial state. Specifically, in the initial state, a compressive residual stress (-100 MPa) in the circumferential direction is applied to an inner surface 40c of the analytic model 40.

In the initial state, it is assumed that no stress is produced in a region between a position P that is away from the inner surface 40c in a radial direction of the analytic model 40 (a position indicated with an arc-shaped broken line) and an outer surface 40d. Further, in the initial state, a stress distribution in a region between the inner surface 40c and the position P is assumed to be a linear distribution such that a compressive stress is gradually decreased from the inner surface 40c to the position P. Figure 2(b) as well as Figure 3 and Figure 4 described later each illustrate a stress state at the end portion 40b. Hereinafter, a distance in the radial direction between the inner surface 40c and a point P1 at which the compressive stress becomes zero at the end portion 40b is denoted as a distance t, and a thickness of the analytic model 40 is denoted as a thickness T. Note that if there is a plurality of points at which the compressive stress becomes zero at the end portion 40b, one of the points closest to the inner surface 40c is taken as P1.

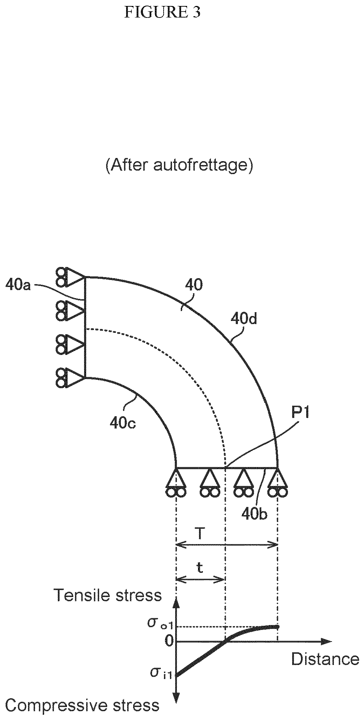

After the volume force is set as described above, an elastic analysis is conducted to redistribute the stress. This changes the stress state in the analytic model 40 as illustrated in Figure 3, for example. Note that, in Figure 3, a position where the stress is zero is indicated with a broken line. In a region inward of the broken line, a compressive stress in a circumferential direction is produced, and in a region outward of the broken line, a tensile stress in the circumferential direction is produced. In the condition illustrated in Figure 3, an integrated value of the stress distribution of the entire analytic model 40 is zero. The stress state illustrated in Figure 3 corresponds to a stress state of the steel pipe 20 after the autofrettage. In the condition illustrated in Figure 3, a stress at an intersection of the inner surface 40c and the end portion 40b is obtained as the residual stress $\sigma_{i1}$ at an inner surface 20b of the steel pipe 20 after the autofrettage, and a stress at an intersection of the outer surface 40d and the end portion 40b is obtained as the residual stress $\sigma_{o1}$ at the outer surface 20a of the steel pipe 20 after the autofrettage.

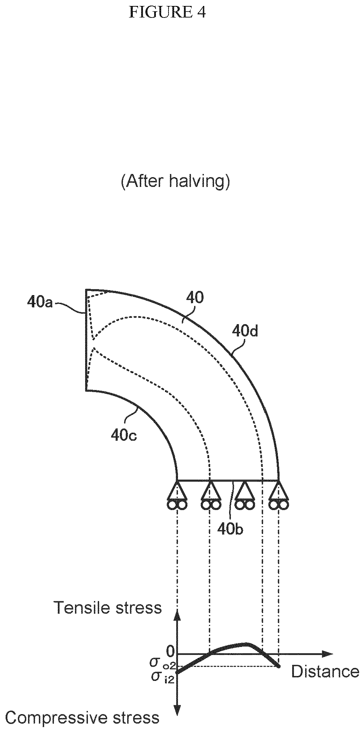

Next, to simulate the halved sample 22 (halved pipe 20), an elastic analysis is conducted with the constraint on the end portion 40a eliminated as illustrated in Figure 4. This further changes the stress state in the analytic model 40. In Figure 4, a position where the stress is zero is indicated with a broken line. In an example illustrated in Figure 4, in the analytic model 40, a tensile stress in the circumferential direction is produced at its center portion in the radial direction, and compressive stresses in the circumferential direction are produced at its arc-shaped region along the inner surface 40c and its arc-shaped region along the outer surface 40d.

In the analytic model 40 illustrated in Figure 4, the end portion 40a corresponds to the cut surface 22c of the halved sample 22 (see Figure 1), and the end portion 40b corresponds to a center portion 22d in the circumferential direction of the halved sample 22 (see Figure 1). In the condition illustrated in Figure 4, a stress at the intersection of the inner surface 40c and the end portion 40b is obtained as the residual stress $\sigma_{i2}$ at the inner surface 22b of the halved sample 22, and a stress at the intersection of the outer surface 40d and the end portion 40b is obtained as the residual stress $\sigma_{o2}$ at the outer surface 22a of the halved sample 22.

The analysis described with reference to Figure 2(b), Figure 3, and Figure 4 is conducted on pipes 20 each having given dimensions with various distances t in the initial state (i.e., while the position of the point P1 at which the compressive stress is zero in Figure 2(b) is varied).

Results of various studies conducted by the present inventors showed that the thickness T of the steel pipe 20 as well as the distance t in the steel pipe 20 after the autofrettage (see Figure 3), the residual stress $\sigma_{o1}$ at the outer surface 20a of the steel pipe 20 (see Figure 3), the residual stress $\sigma_{i1}$ at the inner surface 20b of the steel pipe 20 (see Figure 3), the residual stress $\sigma_{o2}$ at the outer surface 22a of the halved sample 22 (see Figure 4), and the residual stress $\sigma_{i2}$ at the inner surface 22b of the halved sample 22 (see Figure 4), which are determined as described above, have a certain relationship.

Specifically, the present inventors found that there is a certain correlation between the value $(t/T)^2$ and the value $(\sigma_{i2}/-\sigma_{i1})$ in the steel pipe 20 after the autofrettage. The present inventors made a linear approximation of a relationship between the value $(t/T)^2$ and the value $(\sigma_{i2}/-\sigma_{i1})$ by the least squares method, deriving Formula (1) shown below. In Formula (1) below, A and B are coefficients.

$$\sigma_{i2}/(-\sigma_{i1}) = A \times (t/T)^2 - B \qquad (1)$$

Rearrangement of Formula (1) above for $\sigma_{i1}$ gives Formula (i) shown below. In the present invention, A is assumed to be a value given by Formula (iii) shown below, and B is assumed to be one.

$$\sigma_{i1} = (-\sigma_{i2}) / (A\times(t/T)^2 - 1) \qquad (i)$$

$$A = 3.9829 \times \exp(0.1071 \times (D/d)^2) \qquad (iii)$$

The present inventors further found that there is also a certain correlation between the value $(t/T)^2$ and the value $((\sigma_{o2}-\sigma_{o1}) / (-\sigma_{i1}))$ in the steel pipe 20 after the autofrettage. The present inventors made a linear approximation of a relationship between the value $(t/T)^2$ and the value $((\sigma_{o2}-\sigma_{o1}) / (-\sigma_{i1}))$ by the least squares method, deriving Formula (2) shown below. In Formula (2) below, C and E are coefficients.

$$(\sigma_{o2}-\sigma_{o1}) / (-\sigma_{i1}) = -C \times (t/T)^2 - E \qquad (2)$$

From Formula (1) and Formula (2) above, $(t/T)$ can be given by Formula (3) shown below.

$$t/T = ((B\times(\sigma_{o2}-\sigma_{o1}) - E\times\sigma_{i2}) / (A\times(\sigma_{o2}-\sigma_{o1}) - C\times\sigma_{i2}))^{1/2} \qquad (3)$$

Further, in the present invention, B assumed to be one and E assumed to be zero give Formula (ii) shown below. C is assumed to be a value given by Formula (iv) shown below.

$$t/T = ((\sigma_{o2}-\sigma_{o1}) / (A\times(\sigma_{o2}-\sigma_{o1}) - C\times\sigma_{i2}))^{1/2} \qquad (ii)$$

$$C = -3.3966 \times \exp(0.0452 \times (D/d)^2) \qquad (iv)$$

Formula (i) to Formula (iv) obtained from the estimation model enables the calculation of an estimated value $\sigma_{i1}$ of the residual stress at the inner surface 20b of the steel pipe 20 after the autofrettage.
In addition, the steel pipe according to the present invention has a value of $\sigma_{i1}$ of -150 MPa or less. If the compressive residual stress is more than -150 MPa, that is, if an absolute value of the residual stress is less than 150 MPa, the effect of enhancing the critical internal pressure cannot be provided, as will be described later in Examples. Bringing $\sigma_{i1}$ to -150 MPa or less by the autofrettage results in a high critical internal pressure.

3. Studies about Preferable Ranges of Hardness Ratio of Outer Layer Region/Inner Layer Region and Ratio of Outer Diameter/Inner Diameter of Pipe

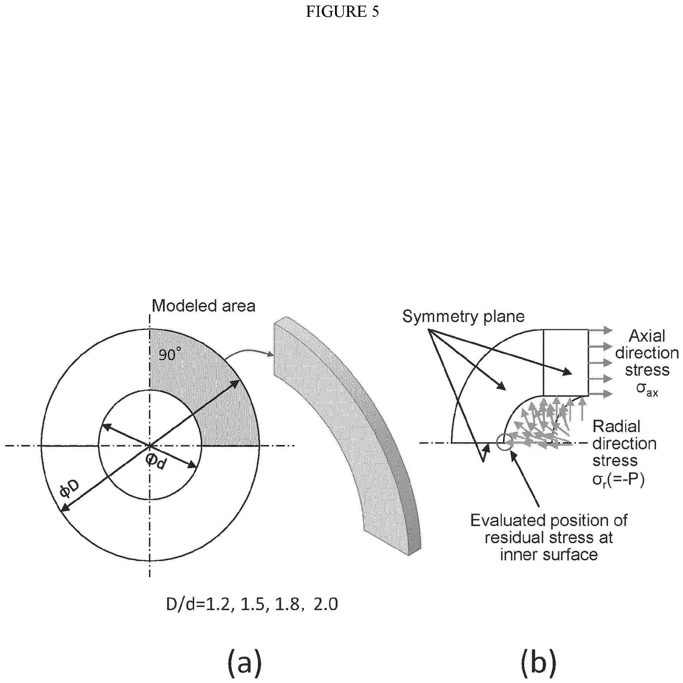

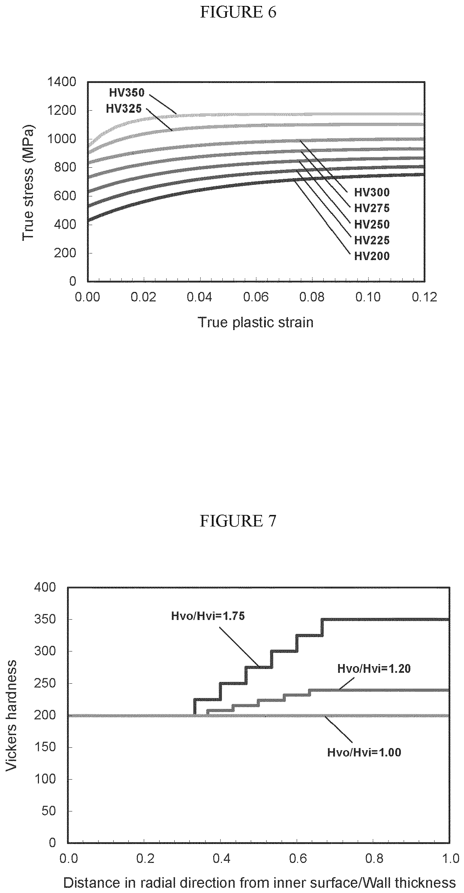

As described above, in the present invention, a ratio Hvo/Hvi between an average hardness Hvo of the starting material for a steel pipe at the outer layer region and an average hardness Hvi of the starting material for a steel pipe at the inner layer region being 1.20 or more, and a ratio D/d between the outer diameter D and the inner diameter d of the starting material for a steel pipe being 2.0 or less are determined as their preferable ranges. The grounds of the determination are based on a numerical calculation based on a FEM analysis described below.
A subject of the analysis has a steel pipe shape illustrated in Figure 1, and an analytic model having a 1/4 cylindrical shape and constituted by three-dimensional hexahedron secondary elements illustrated in Figure 5(a) were used for the FEM analysis. For the analytic model, four shapes having D/d of 1.2, 1.5, 1.8, and 2.0 were used.
The model was assumed to have physical properties of an elasto-plastic body. Its elastic region was set to have a Young's modulus of 205.8 GPa and a Poisson's ratio of 0.3, and for its elasto-plastic region, stress-strain curves based on true stress and true plastic strain, an example of which is illustrated in Figure 6, were used. In the graph, there are a plurality of stress-strain curves corresponding to Vickers hardnesses. This is an approximation of hardness dependency of the stress-strain curves based on results of a preliminary test conducted on carbon steels of various hardness levels. As a hardening rule for the elasto-plastic region, a kinematic hardening rule was used. In the analytic model, different stress-strain curves were set at different positions in the radial direction based on a hardness distribution, as illustrated in Figure 7. There were three values of Hvo/Hvi: 1.00, 1.20, and 1.75.

To analyze a state where an internal pressure acts, a radial direction stress or equivalent to an internal pressure P is set up on an inner surface of the model, and at the same time, an axial direction stress $\sigma ax$ is set up on a cross section of the model, as illustrated in Figure 5(b). $\sigma r$ and $\sigma ax$ are given in the following formulas with the inner diameter d.

$$\sigma r = -P \qquad (4)$$

$$\sigma ax = P \times d^2 / (D^2 - d^2) \qquad (5)$$

Here, Formula (5) above is a basic formula concerning a cylindrical container and based on the following idea. When a subject of the analysis is assumed to be a closed section member, an internal pressure acting on an inner section of the model produces an axial direction load of $P \times \pi d^2/4$. The axial direction load acts on the cross section of the model, and thus axial direction stress $\sigma ax$ is obtained by dividing the axial direction load by a sectional area $\pi(D^2-d^2)/4$ of the cross section of the model.

First, a replication of a burst test was analyzed. In the model, $\sigma r$ and $\sigma ax$ given by Formulas (4) and (5) above are set up in such a manner that $\sigma r$ and $\sigma ax$ are gradually increased from zero in a linear manner. When the entire model plastically deforms, and the analysis reaches its limitation where the analysis does not converge, the analysis is ended. The internal pressure at the limitation is determined as a burst strength given by the analysis. According to a preliminary test, it has been confirmed that a burst strength given by the experiment matches the burst strength given by the analysis.

Next, to replicate the autofrettage, $\sigma r$ and $\sigma ax$ equivalent to internal pressures that are 0.60 times, 0.70 times, and 0.85 times the burst strength were caused to act on the model, and then unloaded. Circumferential residual stresses of the inner surface after the unloading was output, and a minimum value of the circumferential residual stresses (an absolute value of the minimum value serves as a maximum value of the circumferential residual stresses because the circumferential residual stresses are basically compressive residual stresses) is determined as a representative value of residual stresses introduced by the autofrettage.

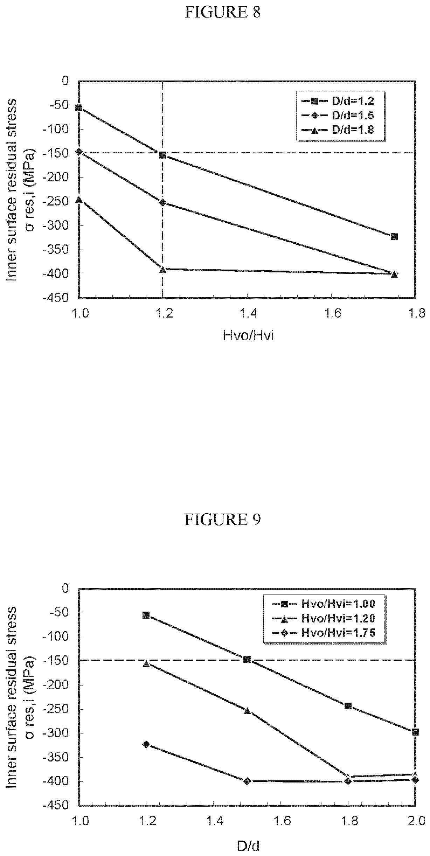

For the residual stresses by the autofrettage obtained in this manner, a relationship with Hvo/Hvi is illustrated in Figure 8, and a relationship with D/d is illustrated in Figure 9. In Figure 8, in the case where D/d is 1.2, the compressive residual stress at the inner surface is -150 MPa or more when Hvo/Hvi is 1.20 or more. In addition, it is found that, in the case where D/d is 1.8, the compressive residual stress does not change when Hvo/Hvi is 1.20 or more.

In Figure 9, in the case where Hvo/Hvi is 1.20, the compressive residual stress at the inner surface is -150 MPa or more when D/d is 1.2 or more. The compressive residual stresses increase with an increase in D/d. However, in the case where Hvo/Hvi is 1.75, the compressive residual stress does not increase to saturate at a certain value when D/d is 1.5 or more. In the case where Hvo/Hvi is 1.20, the compressive residual stress is on a par with the saturated value of the compressive residual stress with Hvo/Hvi being 1.75 when D/d is 1.8 or more. When D/d further increases from 1.8, differences between the compressive residual stress with Hvo/Hvi being 1.00 and the compressive residual stresses with Hvo/Hvi being 1.20 or more become small. When D/d is 2.0, the differences between the compressive residual stress with Hvo/Hvi being 1.00 and the compressive residual stresses with Hvo/Hvi being 1.20 or more are slight. It can be said that the effect of reducing the compressive residual stress after the autofrettage by the hardening treatment is minor in a region where D/d is more than 2.0.

As described above, the ratio Hvo/Hvi between the average hardness Hvo of the starting material for a steel pipe subjected to the hardening treatment at the outer layer region and the average hardness Hvi of the starting material for a steel pipe subjected to the hardening treatment at the inner layer region being 1.20 times or more, and the ratio D/d between the outer diameter D and the inner diameter d of the starting material for a steel pipe being 2.0 or less are determined as their preferable ranges.

3. Production Method

There are no specific restrictions on a method for producing the steel pipe for pressure piping according to the present invention. However, the steel pipe for pressure piping can be produced by performing a step of performing autofrettage under various conditions, for example, on a plurality of starting materials for the steel pipe in each of which the average hardness at the outer layer region is 1.20 times or more the average hardness at the inner layer region, a step of determining $\sigma_{i1}$ of each of the resultant pipes by the method described above, and a step of selecting a steel pipe that makes $\sigma_{i1}$ -150 MPa or less.

Note that the autofrettage conditions can be adjusted to bring $\sigma_{i1}$ to -150 MPa or less by controlling, for example, an autofrettage pressure and/or an autofrettage duration. As described above, by accurately estimating a residual stress at an inner surface of a steel pipe after the autofrettage and before the halving, autofrettage conditions can be optimized, and pipes having a high critical internal pressure can be provided stably.

The present invention will be described below more specifically with reference to Examples, but the present invention is not limited to these Examples.

EXAMPLE

A steel having a chemical composition shown in Table 1 was melted and then subjected to hot forging, by which round bars each having a diameter of 50 mm were obtained. Further, the round bars were subjected to normalizing treatment in which the round bars were heated to 880°C, by which the round bars were prepared as starting materials for test specimens. The starting materials for test specimens had a yield stress of 382 MPa and a tensile strength of 621 MPa.

[Table 1]

Table 1

| Chemical composition (in mass%, balance: Fe and impurities) | | | | | | | | | | | |
|---|---|---|---|---|---|---|---|---|---|---|---|
| C | Si | Mn | P | S | Cu | Cr | Ni | Mo | Ti | Sol. Al | N |
| 0.32 | 0.38 | 0.92 | 0.010 | 0.040 | 0.03 | 0.25 | 0.06 | 0.02 | 0.007 | 0.035 | 0.0033 |

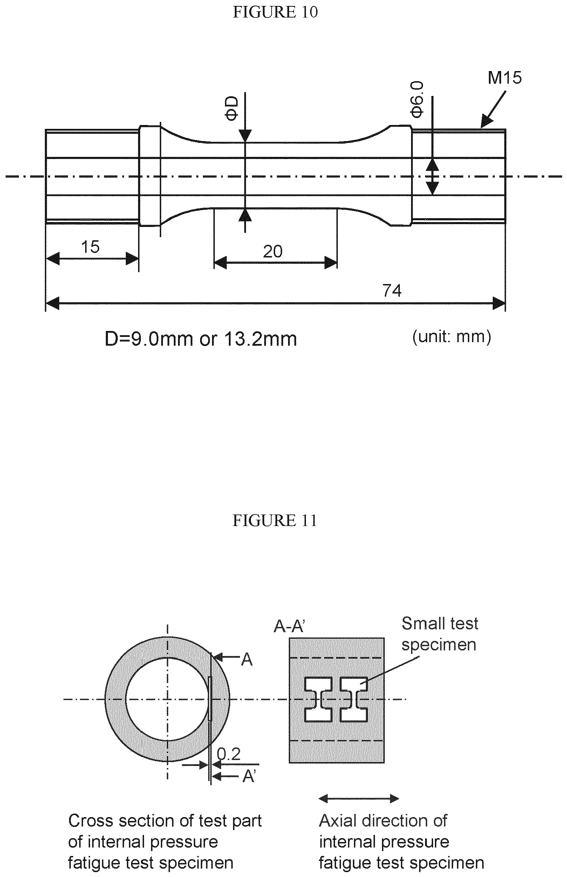

The starting materials for test specimens were subjected to rough machining, heat treatment, and finishing, by which a plurality of internal pressure fatigue test specimens each having a shape illustrated in Figure 10 were taken. Here, a shape after the rough machining was made such that the shape had an outer diameter 1 mm larger and an inner diameter 1 mm smaller compared with the shape after the finishing illustrated in Figure 10. Note that the unit of lengths illustrated in Figure 10 is mm.

Among the resultant internal pressure fatigue test specimens (Test Nos. 1 to 7), Test Nos. 1 to 3 were used as they were (normalized items), and Test Nos. 4 to 7 were further subjected to high-frequency quenching and tempering treatment in which their outer surfaces were instantaneously heated to 1000°C by high-frequency induction heating, and then they were immediately subjected to rapid cooling, subsequently heated to 150°C, held for 1 hour, and then subjected to air cooling (quenched items). The internal pressure fatigue test specimens were then subjected to final finishing processing in which inner and outer surfaces of a test part of each internal pressure fatigue test specimen were subjected to polish finishing. In the shape of the test specimen illustrated in Figure 10, outer diameters of Test Nos. 1, 2, and 4 to 6 are 9.0 mm (D/d: 1.5), and outer diameters of Test Nos. 3 and 7 are 13.2 mm (D/d: 2.2).

In addition, test specimens of Test Nos. 2, 3, and 5 to 7 were subjected to the autofrettage at pressures shown in Table 2. The autofrettage was performed in such a manner as to seal one end face of the internal pressure fatigue test specimen illustrated in Figure 10, fill an inside of the test specimen with hydraulic fluid as a pressure medium from the other end face, and control an internal pressure in a filled portion. The autofrettage is performed in such a manner as to increase the internal pressure in the filled portion to an autofrettage pressure and unload the internal pressure.

[Table 2]

Table 2

| Test No. | Classification | Did | Tensile* strength (MPa) | Yield* stress (MPa) | Yield ratio* | Autofrettage pressure (MPa) | Average hardness (HV) | | Hardness ratio Hvo/Hvi | Measured value of residual stress (MPa) | | | Estimated value of residual stress (MPa) | Critical internal pressure (MPa) | Right side value of formula (I)‡ | |
|---|---|---|---|---|---|---|---|---|---|---|---|---|---|---|---|---|
| | | | | | | | Outer layer region Hvo | Inner layer region Hvi | | $\sigma_{o1}$ | $\sigma_{o2}$ | $\sigma_{i2}$ | $\sigma_{i1}$ | | | |
| 1 | Normalized item | 1.5 | 621 | 382 | 0.62 | - | 205 | 196 | 1.05 | - | - | - | - | 170 | 196 | Comparative example |
| 2 | Normalized item | 1.5 | 628 | 391 | 0.62 | 265 | 196 | 204 | 0.96 | 115 | -6 | 28 | -135 | 170 | 198 | |
| 3 | Normalized item | 2.2 | 625 | 388 | 0.62 | 350 | 201 | 197 | 1.02 | 94 | -66 | -73 | -325 | 290 | 281 | |
| 4 | Quenched item | 1.5 | 631 | 386 | 0.61 | - | 433 | 199 | 2.18 | - | - | - | - | 190 | 199 | Reference example |
| 5 | Quenched item | 1.5 | 628 | 388 | 0.62 | 265 | 440 | 203 | 2.17 | 408 | -11 | 255 | -311 | 210 | 198 | Inventive example |
| 6 | Quenched item | 1.5 | 625 | 390 | 0.62 | 350 | 445 | 199 | 2.24 | 488 | -4 | 321 | -343 | 230 | 197 | |
| 7 | Quenched item | 2.2 | 632 | 385 | 0.61 | 350 | 438 | 202 | 2.17 | 65 | -73 | -114 | -332 | 290 | 284 | |

‡

$$IP \geq 0.44 \times TS \times \alpha \quad \ldots (I)$$

* Tensile test result of small test specimen cut from inner layer region of test part of internal pressure fatigue test specimen

For each Test Number, six test specimens were prepared, and one of the test specimens was used to measure average hardnesses at its outer layer region and its inner layer region and was subjected to a tensile test on the inner layer region. In the measurement of the hardnesses, a section that passes a central axis of the test specimen and is parallel to an axial direction of the test specimen is cut from a test part of the test specimen, and the test specimen is embedded in resin in such a manner that the section serves as an observation surface, and the section is mirror-polished with emery paper and further mirror-polished with a buff. As a hardness tester, a general-purpose micro-Vickers hardness meter was used, with a test force set to 3 N. The measurement was performed on the observation surface at a pitch of 0.1 mm from the inner surface to the outer surface in a radial direction. That is, 14 measurement points were set in total for each of Test Nos. 1, 2, and 4 to 6, and 35 measurement points were set in total for each of Test Nos. 3 and 7. At positions of the measurement points, Vickers indentations were introduced. From a hardness distribution obtained in this manner, items of data on hardnesses at three points in the inner layer region and three points in the outer layer region are averaged, by which the average hardnesses in the inner layer region and the outer layer region are obtained.

As shown in Table 2, hardnesses at the outer layer and inner layer regions of Test Nos. 1 to 3 and hardnesses at the inner layer regions of Test Nos. 4 to 7 were within the range of 196 to 205 HV, and thus changes in hardness by the hardening treatment and the autofrettage were not recognized. The hardnesses at the outer layer regions of Test Nos. 4 to 7 were 433 to 445 HV, and Hvo/Hvi of Test Nos. 4 to 7 were 2.17 to 2.24.

The tensile test was conducted on two small test specimens each of which had a thickness of about 0.2 mm and a dumbbell shape and was cut from an inner layer region of the test part of the internal pressure fatigue test specimen by electrical discharge machining in such a manner that the small test specimens adjoined an inner surface of the test part of the internal pressure fatigue test specimen as illustrated in Figure 11. As a tensile test machine, Tytron 250 from MTS Systems Corporation was used. Strains of the small test specimens were measured in conformance with the method described in Non-Patent Document 1, in which each strain was determined by making a conversion from a displacement of an actuator of a tensile test machine (stroke) and a length of a parallel portion of the test specimen. From stress-strain curves obtained in this manner, with 0.2% proof stress being considered as yield stress and maximum stress being considered as tensile strength, average values of yield stresses and tensile strengths of the two small test specimens were determined as their measurements.

As shown in Table 2, at the inner layer regions of Test Nos. 1 to 7, their tensile strengths were 621 to 632 MPa, their yield stresses were 382 to 391 MPa, and their yield ratios were 0.61 to 0.62. Therefore, changes in tensile strength, yield stress, and yield ratio by the hardening treatment and the autofrettage were not recognized.

Further, another one of the test specimens was subjected to a residual stress measurement. First, an outer layer of an outer surface of the test specimen at its center position in its longitudinal direction was removed within the range of 10 μm or less by electropolishing, and then a circumferential residual stress $\sigma_{o1}$ was measured. As a method for the measurement, the $\sin^2\psi$ method based on X-ray diffraction was used, and the method was performed in conformity with Non-Patent Document 2. Detailed conditions for the measurement are as follows.

- Scanning method: Side inclination method, constant η method (PSPC method)
- X-ray stress measurement apparatus: PSPC-RSF from Rigaku Corporation
- Characteristic X-ray: Cr kα
- Diffraction plane for measurement: α-Fe211
- Entrance slit: Single collimator with a diameter of 0.3 mm
- Incident angles (ψ): 0°, 12.9°, 18.5°, 22.8°, 26.6°, 30.0°, 33.3°, 36.3°, and 39.3°
- Incident angle (ψ): $\psi_P$ axis swing ±3°
- Diffraction angle determination method: Half-value width method
- Stress constant (K): -318 MPa/°

Note that all conditions for a residual stress measurement described below were set as described above.

Next, the test specimens whose the residual stresses at the outer surface were measured were cut in half in their pipe axis direction by wire cut electrical discharge machining. When a position of the residual stress measurement at the outer surface was determined to be 0° in a circumferential direction, a position of the cutting was set to a vicinity of ±90°. A thickness t between a cut surface and an outer surface at a center position in a longitudinal direction of each of the halved samples was set within the range of D/2 ± 0.2 mm.

Then, on each of the halved samples, the circumferential residual stress $\sigma_{o2}$ was measured again at the position of the residual stress measurement at the outer surface before the halving. Further, after the halving, an outer layer of an inner surface of each test specimen at the center position in the longitudinal direction was removed within the range of 10 μm or less by electropolishing, and then a circumferential residual stress $\sigma_{i2}$ at an inner surface of the steel pipe at its center position was measured.

The residual stress measurements $\sigma_{o1}$, $\sigma_{o2}$, and $\sigma_{i2}$ obtained in such a manner are shown in Table 2. These measurements are substituted into Formulas (i) to (iv), which gives the estimated value $\sigma_{i1}$ of the residual stress at the inner surface after the autofrettage and before the halving.

Further, the other test specimens were subjected to an internal pressure fatigue test to determine their critical internal pressures. The internal pressure fatigue test is performed in such a manner as to repeatedly cause an internal pressure to fluctuate within the range of 18 MPa at the minimum from a maximum internal pressure such that the internal pressure follows a sine wave over time. A frequency of the internal pressure fluctuations was set to 8 Hz. A maximum internal pressure up to which no breakage (leak) occurred even when the number of repetitions reached $10^7$ as the result of the internal pressure fatigue test was evaluated as the critical internal pressure. Results of the evaluation are shown together in Table 2.

As clarified from the results shown in Table 2, according to a comparison of the normalized items, between Test No. 1 and Test No. 2, Test No. 2 was not subjected to the hardening treatment to bring the hardness ratio to 1.20 or more. As a result, although the autofrettage was performed, its compressive stress was not set up sufficiently, thus failing to enhance its critical internal pressure compared with Test No. 1, in which the autofrettage was not performed.

In contrast, according to a comparison of the quenched items, between Test No. 4 and Test Nos. 5 and 6, hardnesses at their outer layer regions of Test Nos. 5 and 6 were increased. As a result, their residual stresses were set up sufficiently by the autofrettage, thus enhancing their critical internal pressures.

Test No. 3 is a comparative example whose a hardness ratio did not satisfy its specification according to the present invention. However, its D/d is as high as 2.2. As a result, its residual stress was set up sufficiently by the autofrettage, thus enhancing the critical internal pressure. Test No. 7 had the same D/d as Test No. 3, and a hardness of Test No. 7 at its outer layer region was increased. As a result, its residual stress was set up sufficiently by the autofrettage, but a value of the residual stress was on a par with that of Test No. 3. As a result, Test No. 7 was also on a par with Test No. 3 in the critical internal pressure.

INDUSTRIAL APPLICABILITY

According to the present invention, pipes for pressure piping having a high critical internal pressure can be provided stably. The steel pipe for pressure piping according to the present invention is therefore suitably applicable particularly to a hydraulic cylinder, an airbag steel pipe, an accumulator, a pipe for hydrogen, a fuel injection pipe, or the like.

REFERENCE SIGNS LIST

20 steel pipe
20a outer surface
20b inner surface
22 halved sample
22a outer surface
22b inner surface
22c cut surface
22d center portion
40 analytic model
40a, 40b end portion
40c inner surface
40d outer surface

**Claims**

1. A steel pipe for pressure piping, the steel pipe being subjected to autofrettage,

the steel pipe comprising an outer surface and an inner surface, wherein
an average hardness of the steel pipe in an outer layer region from the outer surface to a 1/4 wall-thickness depth position is 1.20 times or more an average hardness of the steel pipe in an inner layer region from the inner surface to a 1/4 wall-thickness depth position, and
when an outer diameter of the steel pipe is denoted by D (mm), and an inner diameter of the steel pipe is denoted by d (mm), and
when a measured value of a residual stress at an outer surface of the steel pipe after the autofrettage is denoted

by $\sigma_{o1}$ (MPa), a measured value of a residual stress at the outer surface of the steel pipe after the autofrettage and halving is denoted by $\sigma_{o2}$ (MPa), and a measured value of a residual stress at an inner surface of the steel pipe after the autofrettage and the halving is denoted by $\sigma_{i2}$ (MPa),

an estimated value $\sigma_{i1}$ (MPa) of a residual stress at the inner surface of the steel pipe after the autofrettage is -150 MPa or less, the estimated value $\sigma_{i1}$ as determined by Formula (i) to Formula (iv) shown below.

$$\sigma_{i1} = (-\sigma_{i2}) / (A \times (t/T)^2 - 1) \qquad (i)$$

$$t/T = ((\sigma_{o2} - \sigma_{o1}) / (A \times (\sigma_{o2} - \sigma_{o1}) - C \times \sigma_{i2}))^{1/2} \qquad (ii)$$

$$A = 3.9829 \times \exp(0.1071 \times (D/d)^2) \qquad (iii)$$

$$C = -3.3966 \times \exp(0.0452 \times (D/d)^2) \qquad (iv)$$

2. The steel pipe for pressure piping according to claim 1, wherein D/d is 2.0 or less.

3. A starting material for a steel pipe for pressure piping, the starting material for a steel pipe to be used for an application for which the starting material for a steel pipe is to be subjected to autofrettage,

the starting material for a steel pipe comprising an outer surface and an inner surface, wherein an average hardness of the steel pipe in an outer layer region from the outer surface to a 1/4 wall-thickness depth position is 1.20 times or more an average hardness of the steel pipe in an inner layer region from the inner surface to a 1/4 wall-thickness depth position, and
when the starting material for a steel pipe is subjected to the autofrettage,
when an outer diameter of the steel pipe after the autofrettage is denoted by D (mm), and an inner diameter of the steel pipe after the autofrettage is denoted by d (mm), and
when a measured value of a residual stress at an outer surface of the steel pipe after the autofrettage is denoted by $\sigma_{o1}$ (MPa), a measured value of a residual stress at the outer surface of the steel pipe after the autofrettage and halving is denoted by $\sigma_{o2}$ (MPa), and a measured value of a residual stress at an inner surface of the steel pipe after the autofrettage and the halving is denoted by $\sigma_{i2}$ (MPa),
an estimated value $\sigma_{i1}$ (MPa) of a residual stress at the inner surface of the steel pipe after the autofrettage is -150 MPa or less, the estimated value $\sigma_{i1}$ as determined by Formula (i) to Formula (iv) shown below.

$$\sigma_{i1} = (-\sigma_{i2}) / (A \times (t/T)^2 - 1) \qquad (i)$$

$$t/T = ((\sigma_{o2} - \sigma_{o1}) / (A \times (\sigma_{o2} - \sigma_{o1}) - C \times \sigma_{i2}))^{1/2} \qquad (ii)$$

$$A = 3.9829 \times \exp(0.1071 \times (D/d)^2) \qquad (iii)$$

$$C = -3.3966 \times \exp(0.0452 \times (D/d)^2) \qquad (iv)$$

4. The starting material for a steel pipe for pressure piping according to claim 3, wherein D/d is 2.0 or less.

FIGURE 1

(a)

(b)

(c)

(d)

FIGURE 2

(a)

(b)

FIGURE 3

(After autofrettage)

FIGURE 4

(After halving)

FIGURE 5

Modeled area

90°

φd

φD

D/d=1.2, 1.5, 1.8, 2.0

(a)

Symmetry plane

Axial
direction
stress
$\sigma_{ax}$

Radial
direction
stress
$\sigma_r(=-P)$

Evaluated position of
residual stress at
inner surface

(b)

FIGURE 6

FIGURE 7

FIGURE 8

FIGURE 9

FIGURE 10

D=9.0mm or 13.2mm                    (unit: mm)

FIGURE 11

Cross section of test part
of internal pressure
fatigue test specimen

Axial direction of
internal pressure
fatigue test specimen

## INTERNATIONAL SEARCH REPORT

| International application No. |
|---|
| **PCT/JP2022/000422** |

### A. CLASSIFICATION OF SUBJECT MATTER

*F16L 9/02*(2006.01)i; *B60R 21/264*(2006.01)i; *C21D 7/02*(2006.01)i; *C22C 38/00*(2006.01)i; *C22C 38/50*(2006.01)i; *F02M 55/02*(2006.01)i
FI: F16L9/02; B60R21/264; C21D7/02 C; C22C38/00 301Y; C22C38/00 301Z; C22C38/50; F02M55/02 320P

According to International Patent Classification (IPC) or to both national classification and IPC

### B. FIELDS SEARCHED

Minimum documentation searched (classification system followed by classification symbols)

F16L9/02; B60R21/264; C21D7/02; C22C38/00; C22C38/50; F02M55/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2015/0183015 A1 (ATI PROPERTIES, INC.) 02 July 2015 (2015-07-02) paragraphs [0004], [0040], [0043]-[0044], fig. 11-13B | 1-4 |
| A | JP 2004-92551 A (USUI KOKUSAI SANGYO KAISHA, LTD.) 25 March 2004 (2004-03-25) entire text, all drawings | 1-4 |
| A | WO 2016/203924 A1 (USUI KOKUSAI SANGYO KAISHA, LTD.) 22 December 2016 (2016-12-22) entire text, all drawings | 1-4 |
| A | JP 2005-201254 A (USUI KOKUSAI SANGYO KAISHA, LTD.) 28 July 2005 (2005-07-28) entire text, all drawings | 1-4 |
| A | JP 61-283415 A (KAWASAKI HEAVY IND., LTD.) 13 December 1986 (1986-12-13) entire text, all drawings | 1-4 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/000422**

| Patent document cited in search report | | | Publication date (day/month/year) | Patent family member(s) | | | Publication date (day/month/year) |
|---|---|---|---|---|---|---|---|
| US | 2015/0183015 | A1 | 02 July 2015 | US | 8479549 | B1 | |
| | | | | WO | 2015/006089 | A1 | |
| | | | | TW | 201521898 | A | |
| JP | 2004-92551 | A | 25 March 2004 | US | 2004/0080156 | A1 | |
| | | | | entire text, all drawings | | | |
| | | | | US | 2006/0260124 | A1 | |
| | | | | DE | 10340070 | A1 | |
| | | | | FR | 2844011 | A1 | |
| | | | | KR | 10-2004-0020843 | A | |
| | | | | CN | 1490515 | A | |
| WO | 2016/203924 | A1 | 22 December 2016 | US | 2018/0171426 | A1 | |
| | | | | entire text, all drawings | | | |
| | | | | EP | 3312298 | A1 | |
| | | | | CN | 107735506 | A | |
| | | | | KR | 10-2018-0018742 | A | |
| JP | 2005-201254 | A | 28 July 2005 | US | 2005/0127665 | A1 | |
| | | | | entire text, all drawings | | | |
| | | | | DE | 102004061175 | A1 | |
| | | | | FR | 2863668 | A1 | |
| | | | | KR | 10-2005-0061374 | A | |
| | | | | CN | 1637273 | A | |
| JP | 61-283415 | A | 13 December 1986 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4183820 A

**Non-patent literature cited in the description**

- **EISUKE NAKAYAMA ; MITSUO MIYAHARA ; KAZUO OKAMURA ; HIROKI FUJIMOTO ; KIYOYUKI FUKUI.** Prediction of Fatigue Strength of Spot-Welded Joints Based on Local Material Strength Properties Measured by Small Specimen. *J.Soc, Mat. Sci., Japan,* October 2004, vol. 53 (10), 1136-1142

- *Standard for X-Ray Stress Measurement (2002) - Iron and Steel,* March 2002